# FASCICULE DE BREVET EUROPEEN

(11) **EP 0 446 096 B1**
(45) Date de publication et mention de la délivrance du brevet: **18.11.1993**
(21) Numéro de dépôt: 91400493.2
(22) Date de dépôt: 22.02.1991
(51) Int. Cl.: B60T 17/04, B60T 11/10

(54) **Système de freinage avec circuit d'alimentation en fluide sous pression des freins montés sur un train, notamment directeur de véhicule**
Bremssystem mit einer Bremsleitung für Bremsflüssigkeit, montiert auf einer Achse, insbesondere Lenkachse
Brake system with brake line for pressurised fluid mounted on an axle, especially steered axle

(30) Priorité: 05.03.1990 FR 9002744
(43) Date de publication de la demande: 11.09.1991
(73) Titulaire: AUTOMOBILES PEUGEOT, 75116 Paris (FR); AUTOMOBILES CITROEN, 92200 Neuilly-sur-Seine (FR)
(72) Inventeur: Pelcot, Alain, F-95250 Beauchamp (FR)
(74) Mandataire: Durand, Yves Armand Louis

(56) Documents cités:
- EP-A- 0 071 056
- DE-A- 3 246 779
- US-A- 3 851 672

## Description

La présente invention se rapporte à des systèmes de freinage pour des véhicules et plus particulièrement à des circuits d'alimentation en fluide sous pression pour chacun des freins associés aux roues d'un train, notamment directeur, d'un véhicule automobile par exemple.

Dans les systèmes de freinage pour véhicule automobile de ce type, une source de fluide sous pression, telle que par exemple un maître-cylindre monté sur la caisse du véhicule est raccordée, par un circuit d'amenée de fluide sous pression, à l'étrier de frein de chaque roue.

Le circuit d'alimentation en fluide sous pression comporte un tube rigide longeant la doublure d'une aile du véhicule et reliant le maître-cylindre à une partie flexible s'étendant de façon ballante entre l'étrier et le tube rigide.

Toutefois, la mise en place de ce circuit requiert une intervention manuelle de raccordement entre le tube rigide et le tuyau flexible qui, le plus souvent est monté sur chacun des étriers du frein, cette intervention ne pouvant être effectuée qu'après le montage du train sur la caisse du véhicule. Un tel circuit ne permet pas donc pas un montage entièrement automatisé des trains et oblige à repousser la vérification de l'étanchéité du circuit de freinage, et par conséquent à retarder les interventions permettant de remédier à d'éventuels défauts ou fuites après l'opération de raccordement des deux parties du circuit de freinage.

Ainsi, la présente invention a pour but de remédier à tous ces inconvénients de l'état de la technique. Pour atteindre ce but, la présente invention propose un système de freinage du type comprenant un circuit d'alimentation en fluide sous pression pour chaque frein associé à une roue d'un train, notamment directeur, d'un véhicule automobile, chaque circuit comportant un tube rigide relié à un dispositif maître-cylindre formant source de fluide sous pression et monté sur la caisse du véhicule, ainsi qu'une partie de liaison du tube rigide et de l'étrier de frein, qui comprend un tuyau flexible, caractérisé en ce que le circuit précité est monté sur le train du véhicule.

L'invention est de plus caractérisée en ce que chaque tuyau flexible précité est supporté par un élément de la tringlerie de suspension du véhicule qui est solidaire en mouvement de l'étrier, tel qu'une biellette de renvoi d'une barre anti-dévers, de manière à accompagner les mouvements relatifs de l'étrier par rapport à la traverse du train précité.

Suivant encore une caractéristique de l'invention, chaque tuyau flexible est supporté à ses extrémités par l'intermédiaire d'organes de support respectivement à l'extrémité de la biellette de renvoi qui est solidaire en mouvement de l'étrier, et à l'extrémité d'un berceau de la traverse précitée.

L'invention est encore caractérisée en ce que chaque tuyau flexible est relié à la biellette de renvoi au niveau de la partie médiane de cette dernière et à l'aide d'un organe d'attache tel qu'un élément de clippage.

Mais d'autres avantages et caractéristique de la présente invention apparaîtront mieux dans la description détaillée qui suit et se refère aux dessins annexés, donnés uniquement à titre d'exemple et dans lesquels.

La figure 1 est une vue schématique et en perspective d'une partie de train directeur de véhicule automobile comportant une articulation horizontale et sur laquelle est installé un circuit d'alimentation suivant l'invention.

La figure 2 est une vue en perspective d'une partie de train comportant une articulation verticale, sur laquelle est installé un circuit d'alimentation suivant l'invention.

Les figures 3 et 4 représentent en perspective des éléments de clippage du tuyau flexible sur un élément de tringlerie de la suspension du véhicule.

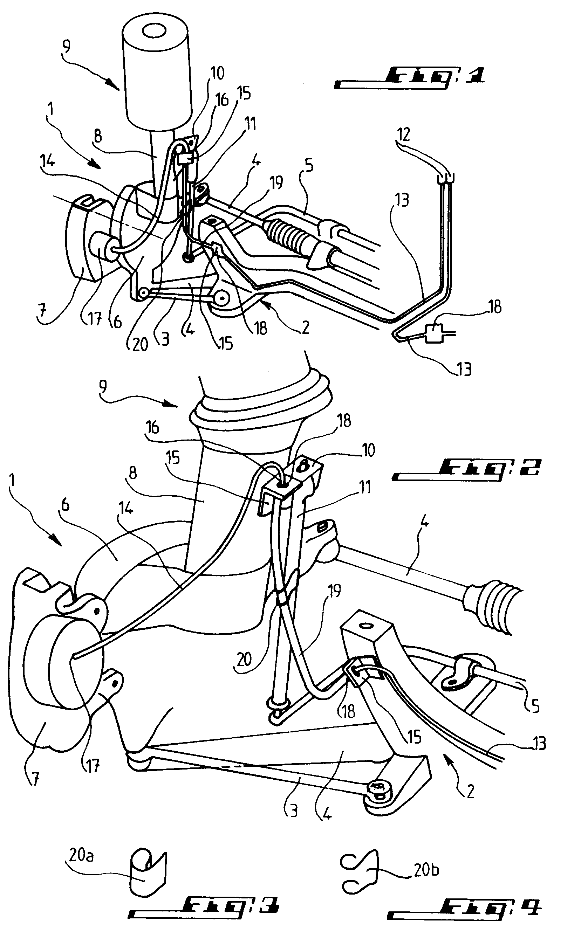

En se reportant maintenant aux figures 1 et 2, on voit une partie d'extrémité d'un train avant 1 d'un véhicule automobile, constitué par une traverse 2 sur laquelle sont articulées des tringles et des bielles 3 et 4 respectivement de la direction et de la suspension du véhicule, ainsi qu'une barre anti-dévers 5. A l'extrémité des tringles et des bielles 3 et 4 est monté un moyeu de support 6 d'une roue (non représentée), sur lequel sont fixés d'une part un étrier 7 du frein (non représenté) associé à la roue précitée et d'autre part une jambe 8 d'un élément de suspension 9. La jambe 8 comporte à sa partie faisant face à la traverse 2, une patte de réception 10 de l'extrémité supérieure d'une biellette de renvoi 11 de la barre anti-dévers 5, qui s'étend sensiblement à la verticale depuis une liaison rotulante de l'extrémité de la barre anti-dévers 5 précitée jusqu'à ladite patte de réception 10 dans laquelle la biellette de renvoi 11 est montée pivotante.

Comme on le voit sur la figure 1, un circuit d'alimentation des freins en fluide sous pression est monté sur le train 1 précité et est relié, par des éléments de raccordement 12, à un dispositif maître-cylindre (non représenté) solidaire de la caisse du véhicule.

Ce circuit d'alimentation comporte un tube rigide 13 qui s'étend le long de la traverse 2 depuis les éléments de raccordement 12, jusqu'à l'extrémité de la traverse 2 où sont articulées les tringles et les bielles 3 et 4.

On comprend déjà que les tubes rigides 13 qui sont montés sur un même train du véhicule, sont fixés le long de la traverse 2 de façon que leurs éléments de raccordement 12 soient situés à proximité les uns des autres, avantageusement au niveau du dispositif maître-cylindre, afin de faciliter la connexion de ce dernier au dispositif maître-cylindre, une fois le train assemblé avec la caisse du véhicule.

On a montré en 14 un conduit rigide qui s'étend depuis une portion de raccordement 17 de l'étrier de frein 7 jusqu'à un trou 16 formé dans un organe de support 15 en forme d'équerre et fixé sur la jambe 8 précitée de manière à former un prolongement de la patte de réception 10.

Ce trou 16 reçoit y fixé un élément de raccordement 18 d'un tuyau flexible 19 qui relie le tuyau rigide 13 au conduit rigide 14. Le tuyau flexible 19 est rendu solidaire de la biellette de renvoi 11, au niveau de sa partie médiane, à l'aide d'un organe d'attache 20 tel qu'une bague déformable 20a ou un élément de clippage 20b du type de ceux visibles sur les figures 3 et 4. respectivement.

On voit bien sur la figure 2 que le tuyau flexible 19 est retenu à proximité de la biellette 11 grâce à un organe d'attache 20 dont une partie est clippée sur ledit tuyau 19 et dont la partie libre est fixée à la biellette de renvoi 11 par soudage ou encore par enroulement dans une gorge (non représentée) formée dans ladite biellette.

Le tuyau flexible 19 est supporté par son extrémité opposée à la patte 10, sur l'extrémité du berceau de la traverse 2 à l'aide d'un organe de support 15 similaire à celui décrit plus haut et pouvant comporter lui aussi un élément 18 de raccordement avec le tube rigide 13.

Grâce à un tel montage du tuyau flexible 19, on évite que la biellette de renvoi 11, qui est montée entre la patte de réception 10 et la barre anti-dévers 5, ne soit soumise à des efforts supplémentaires dûs au poids du tuyau flexible 19, puisque l'organe d'attache 20 n'a pas pour fonction de fixer le tuyau à la biellette pour que celui-ci en supporte le poids, mais ne sert qu'à maintenir ledit tuyau flexible 19 à proximité de ladite biellette afin d'éviter que les déplacement de celle-ci ne soient entravés par ce tuyau.

On précisera encore ici que, comme on le voit bien sur les figures 1 et 2, les tringles et les bielles 3 et 4 peuvent être indifféremment articulées sur la traverse 2 à l'aide de liaisons pivot dont les axes de rotation s'entendent sensiblement à l'horizontale, comme sur la figure 1, où s'étendent sensiblement à la verticale, comme sur le train visible sur la figure 2.

Il convient d'ajouter ici que la liaison du tuyau flexible 19 avec d'une part le tuyau rigide 13 et d'autre part le conduit rigide 14 peut ne pas être effectuée directement au niveau des organes de support 15, mais peut être effectuée séparemment, par exemple au niveau d'extrémités respectives du tuyau rigide et du conduit rigide, faisant saillie chacune de l'organe de support 15 sur lequel ceux-ci sont fixés.

On comprend donc que l'invention peut non seulement s'appliquer à tout type de trains avant ou arrière dont les roues sont directrices et dont les systèmes de transmission sont montés transversalement par rapport au véhicule, mais cette invention peut également s'appliquer aux circuits d'alimentation en fluide sous pression des éléments de suspension d'un véhicule, une telle utilisation de l'invention permettant de diminuer avantageusement les chutes de pression dues à l'élasticité des conduites flexibles et ce, grâce à une réduction maximale des tronçons flexibles de ces circuits.

On a ainsi réalisé un système de freinage comportant un circuit d'alimentation en fluide sous pression qui permet à la fois de simplifier le travail d'assemblage du train sur la caisse du véhicule et de diminuer le nombre d'interventions manuelles nécessaires pour cet assemblage. En outre, on a réalisé un circuit d'alimentation dans lequel les tronçons rigides sont avantageusement fixés au train du véhicule et dans lequel le tuyau flexible n'est pas ballant, mais est solidaire d'un élément de tringlerie se déplaçant avec la roue, afin d'éviter que ce tuyau n'entrave les débattements verticaux de la suspension et les déplacements relatifs au braquage de cette roue.

De plus, grâce à un tel système de freinage, les opérations de contrôle de l'étanchéité des circuits d'alimentation en fluide sous pression de chacun des freins peuvent être effectuées lors de l'assemblage du train, ce qui permet de remédier rapidement et avec facilité aux défauts éventuels que ceux-ci pourraient présenter.

Bien entendu, l'invention n'est nullement limitée aux modes de réalisation décrits et illustrés qui n'ont été donnés qu'à titre d'exemple.

C'est ainsi que la forme et la disposition des tronçons rigides et flexible constituant le circuit d'alimentation, ainsi que la manière dont ceux-ci sont rendus solidaires du train du véhicule peuvent être quelconques et sont fonction de l'usage que l'on désire en faire.

## Revendications

1. Système de freinage du type comprenant un circuit d'alimentation en fluide sous pression pour chaque frein associé à une roue d'un train, notamment directeur d'un véhicule automobile, chaque circuit comportant un tube rigide (13) relié à un dispositif maître-cylindre formant source de fluide sous pression et monté sur la caisse du véhicule, ainsi qu'une partie de liaison (14, 19) du tube rigide (13) et de l'étrier (7) du frein, qui comprend un tube flexible (19), caractérisé en ce que le circuit précité est monté sur le train du véhicule.

2. Système selon la revendication 1, caractérisé en ce que chaque tuyau flexible (19) précité est supporté par un élément (11) de la tringlerie de suspension du véhicule qui est solidaire en mouvement de l'étrier (7), tel qu'une biellette de renvoi (11) d'une barre anti-dévers (5), de manière à accompagner les mouvements relatifs de l'étrier (7) par rapport à la traverse (2) du train précité.

3. Système selon la revendication 2, caractérisé en ce que chaque tuyau flexible (19) est supporté à ses extrémités par l'intermédiaire d'organes de support (15) respectivement à l'extrémité de la biellette de renvoi (11) qui est solidaire en mouvement de l'étrier (7) du frein, et à l'extrémité d'un berceau de la traverse (2) précitée.

4. Système selon l'une des revendications 1 à 3, caractérisé en ce que chaque tuyau flexible (19) est relié à la biellette de renvoi (11) au niveau de la partie médiane de cette dernière et à l'aide d'un organe d'attache (20, 20a, 20b) tel qu'un élément de clippage (20b).

## Patentansprüche

1. Bremssystem derjenigen Gattung, mit einem Druckmittelspeisungskreislauf für jede einem Rad eines Radachssatzes insbesondere zur Lenkung eines Kraftfahrzeugs zugeordnete Bremse, wobei jeder Kreislauf ein mit einer eine Druckmittelquelle bildenden und an dem Wagenkasten des Fahrzeugs angeordneten Bremshauptzylindervorrichtung verbundenes steifes Rohr (13), sowie einen Teil (14, 19) zur Verbindung des steifen Rohres (13) und der Bremsgabel (7), welcher Teil einen biegsamen Schlauch (19) umfasst, aufweist, dadurch gekennzeichnet, dass der vorgenannte Kreislauf an dem Radachssatz des Fahrzeugs angeordnet ist.

2. System nach Anspruch 1, dadurch gekennzeichnet, dass jeder vorgenannte biegsame Schlauch (19) durch ein Element (11) des Aufhängungsgestänges des Fahrzeugs getragen wird, welches Element bewegungsfest mit der Gabel (7), wie ein Vorgelegelenker (11) einer Antiachssturzstange (5) ist, um die relativen Bewegungen der Gabel (7) in Bezug auf den Querträger (2) des vorgenannten Radachssatzes zu begleiten.

3. System nach Anspruch 2, dadurch gekennzeichnet, dass jeder biegsame Schlauch (19) an seinen Enden über Halterungsglieder (15) jeweils an dem Ende des Vorgelegelenkers (11), das mit dem Bremsbügel (7) bewegungsfest ist und an dem Ende einer Wiege des vorgenannten Querträgers (2) getragen wird.

4. System nach einem der Ansprüche 1 bis 3, dadurch gekennzeichnet, dass jeder biegsame Schlauch (19) mit dem Vorgelegelenker (11) im Bereich des mittleren Teiles des letzteren und mit Hilfe eines Befestigungsgliedes (20, 20a, 20b), wie eines Klemmelementes (20b) verbunden ist.

## Claims

1. Braking system of the type comprising a circuit for supplying a fluid under pressure for each brake associated with one wheel of one in particular steering axle assembly of an automotive vehicle, each circuit comprising a rigid tube (13) connected to a master-cylinder device forming a source of fluid under pressure and mounted onto the body of the vehicle as well as a portion (14,19) for the connection of the rigid tube (13) and of the brake yoke (7), which comprises a flexible hose pipe (19), characterized in that the aforesaid circuit is mounted onto the axle assembly of the vehicle.

2. System according to claim 1, characterized in that each aforesaid flexible hose pipe is supported by an element (11) of the suspension linkage of the vehicle which is motion-bound with the yoke (7), such as a counter-link (11) of an antitilt rod (5) so as to accompany the relative motions of the yoke (7) with respect to the cross member (2) of the aforesaid axle assembly.

3. System according to claim 2, characterized in that each flexible hose pipe (19) is supported at its ends through the medium of support members (15) respectively at the end of the counter-link (11) which is motion-bound with the brake yoke (7) and at the end of a mounting of the aforesaid cross member (2).

4. System according to one of claims 1 to 3, characterized in that each flexible hose pipe (19) is connected to the counter-link (11) at the level of the middle portion of the latter and with the assistance of a fastening member (20, 20a, 20b) such as a clipping element (20b).
